(19) Europäisches Patentamt
European Patent Office
Office européen des brevets

(11) EP 0 947 856 A2

(12) **EUROPEAN PATENT APPLICATION**

(43) Date of publication:
**06.10.1999 Bulletin 1999/40**

(51) Int. Cl.$^6$: **G02B 1/04**, C08F 230/02, C08F 246/00

(21) Application number: **99106591.3**

(22) Date of filing: **31.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.04.1998 JP 9143798**

(71) Applicant: **Menicon Co., Ltd.**
**Nagoya-shi Aichi-ken (JP)**

(72) Inventors:
- **Kazuhiko, Nakada, c/o Menicon CO.,LTD. Kasugai-shi, Aichi-ken (JP)**
- **Sadanori, Oono, c/o Menicon CO.,LTD. Kasugai-shi, Aichi-ken (JP)**

(74) Representative:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(54) **Ocular lens material**

(57) An ocular lens material comprising a polymer prepared by polymerizing a monomer mixture containing at least one of (A-1) a compound represented by the formula (I):

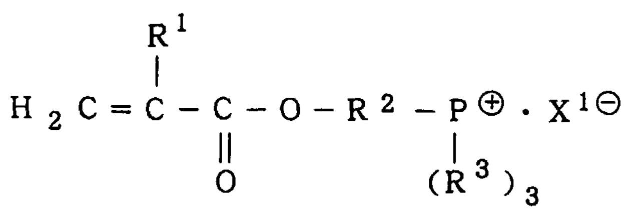

(I)

wherein $R^1$ is hydrogen atom or methyl group, $R^2$ is an alkylene group having 1 to 8 carbon atoms, $R^3$ is an alkyl group having 1 to 18 carbon atoms and $X^1$ is a halogen atom, and (A-2) a compound represented by the formula (II):

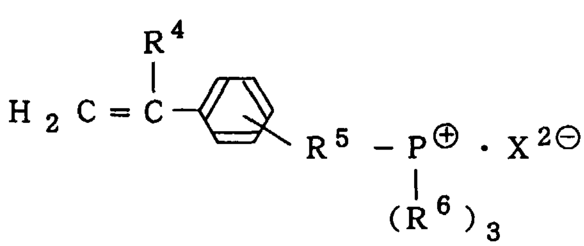

(II)

wherein $R^4$ is hydrogen atom or methyl group, $R^5$ is an alkylene group having 1 to 8 carbon atoms, $R^6$ is an alkyl group having 1 to 18 carbon atoms and $X^2$ is a halogen atom. The ocular lens material shows excellent antibacterial property.

EP 0 947 856 A2

## Description

The present invention relates to an ocular lens material. More particularly, the present invention relates to an ocular lens material showing excellent antibacterial property, which can be suitably used for an ocular lens such as a contact lens, an intraocular lens or an artificial cornea, in particular, for a water-absorptive contact lens.

In recent years, various antibacterial products are developed. In particular, because an ocular lens such as a contact lens, an intraocular lens or an artificial cornea must show excellent safety for eyes, it is proposed that various antibacterial materials are used as an ocular lens material.

For instance, in Japanese Unexamined Patent Publication No. 337378/1994, there are disclosed a hydrogel containing a copolymer prepared by copolymerizing a monomer mixture containing a hydrocarbon group-containing (meth) acrylate which contains hydroxy group and may have ether bond in its chain and a monomer having a quaternary ammonium salt in its side chain, and a soft contact lens containing the hydrogel.

To be sure, the above hydrogel itself has certain antibacterial property, however, copolymerizing property between monomers to be used has not been improved yet. Accordingly, the hydrogel is insufficient for practical use.

An object of the present invention is to provide an ocular lens material showing excellent antibacteriai property in addition to excellent transparency, which is prepared by utilizing components showing excellent copolymerizing property and which also can be suitably used for a high water-absorptive lens or a gas permeable lens.

This and other objects of the present invention will become apparent from the description hereinafter.

In accordance with the present invention, there is provided an ocular lens material comprising a polymer prepared by polymerizing a monomer mixture containing at least one of

(A-1) a compound represented by the formula (I):

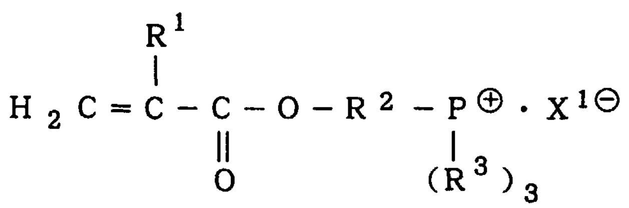

(I)

wherein $R^1$ is hydrogen atom or methyl group, $R^2$ is an alkylene group having 1 to 8 carbon atoms, $R^3$ is an alkyl group having 1 to 18 carbon atoms and $X^1$ is a halogen atom, and
(A-2) a compound represented by the formula (II):

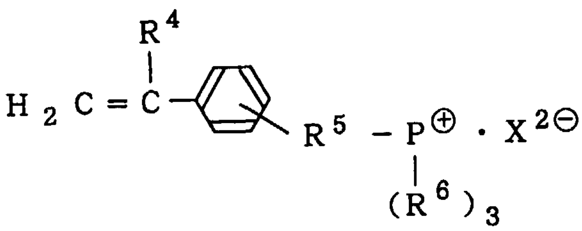

(II)

wherein $R^4$ is hydrogen atom or methyl group, $R^5$ is an alkylene group having 1 to 8 carbon atoms, $R^6$ is an alkyl group having 1 to 18 carbon atoms and $X^2$ is a halogen atom.

The ocular lens material of the present invention shows excellent antibacterial property in addition to excellent transparency and has suitable water content.

Accordingly, the ocular lens material of the present invention can be suitably used for an ocular lens such as a contact lens, an intraocular lens or an artificial cornea, in particular, for a water-absorptive contact lens.

The ocular lens material of the present invention comprises, as mentioned above, a polymer prepared by polymerizing a monomer mixture containing at least one of

a compound (A-1) represented by the formula (I):

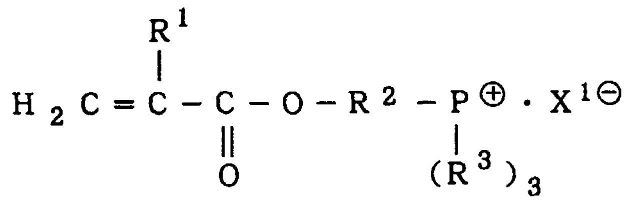

(I)

wherein $R^1$ is hydrogen atom or methyl group, $R^2$ is an alkylene group having 1 to 8 carbon atoms, $R^3$ is an alkyl group having 1 to 18 carbon atoms and $X^1$ is a halogen atom, and

a compound (A-2) represented by the formula (II):

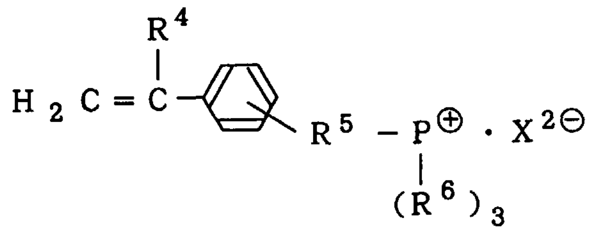

(II)

wherein $R^4$ is hydrogen atom or methyl group, $R^5$ is an alkylene group having 1 to 8 carbon atoms, $R^6$ is an alkyl group having 1 to 18 carbon atoms and $X^2$ is a halogen atom.

The above compound (A-1) and the above compound (A-2) are components showing antibacterial property based on quaternary phosphonium group in each molecule and also having hydrophilic property.

Both $R^2$ in the formula (I) which represents the compound (A-1) and $R^5$ in the formula (II) which represents the compound (A-2) are alkylene groups having 1 to 8 carbon atoms. From the viewpoint that high antibacterial property can be effectively kept, it is desired that each of $R^2$ and $R^5$ is an alkylene group having 1 to 4 carbon atoms. Both $R^3$ in the formula (I) and $R^6$ in the formula (II) are alkyl groups having 1 to 18 carbon atoms. From the viewpoint that high antibacterial activity can be exhibited, it is desired that each of $R^3$ and $R^6$ is an alkyl group having 3 to 12 carbon atoms. In the formula (I), three kinds of $R^3$ may be the same as or different from each other. In the formula (II), three kinds of $R^6$ may be the same as or different from each other.

Both $X^1$ in the formula (I) and $X^2$ in the formula (II) are halogen atoms. Examples of the halogen atom are, for instance, chlorine atom, bromine atom, iodine atom and the like.

Concrete examples of the compound (A-1) are, for instance, tri-n-butyl(2-(meth)acryloyloxyethyl)phosphonium chloride, tri-n-hexyl(2-(meth)acryloyloxyethyl)phosphonium chloride, tri-n-octyl(2-(meth)acryloyloxyethyl)phosphonium chloride, tri-n-butyl(2-(meth)acryloyloxyethyl)phosphonium bromide, tri-n-hexyl(2-(meth)acryloyloxyethyl)phosphonium bromide, tri-n-octyl(2-(meth)acryloyloxyethyl)phosphonium bromide, tri-n-butyl(2-(meth)acryloyloxyethyl)phosphonium iodide, tri-n-hexyl(2-(meth)acryloyloxyethyl)phosphonium iodide, tri-n-octyl(2-(meth)acryloyloxyethyl)phosphonium iodide and the like.

Concrete examples of the compound (A-2) are, for instance, tri-n-butyl(4-vinylbenzyl)phosphonium chloride, tri-n-hexyl(4-vinylbenzyl)phosphonium chloride, tri-n-octyl(4-vinylbenzyl)phosphonium chloride, tri-n-butyl(4-vinylbenzyl)phosphonium bromide, tri-n-hexyl(4-vinylbenzyl)phosphonium bromide, tri-n-octyl(4-vinylbenzyl)phosphonium bromide, tri-n-butyl(4-vinylbenzyl)phosphonium iodide, tri-n-hexyl(4-vinylbenzyl)phosphonium iodide, tri-n-octyl(4-vinylbenzyl)phosphonium iodide and the like.

Each of the compound (A-1) and the compound (A-2) can be used alone or in admixture thereof. Among them, from the viewpoint that antibacterial property can be greatly imparted to a polymer, tri-n-butyl(2-methacryloyloxyethyl)phosphonium chloride and tri-n-octyl (4-vinylbenzyl)phosphonium chloride are preferable.

In order to sufficiently impart antibacterial property to a polymer, it is desired that the amount of at least one of the compound (A-1) and the compound (A-2) in the monomer mixture is at least 0.1 % by weight, preferably at least 0.5 % by weight, more preferably at least 1 % by weight. In order to remove a fear that safety of an ocular lens material is lowered, it is desired that the amount of at least one of the compound (A-1) and the compound (A-2) in the monomer mixture is at most 30 % by weight, preferably at most 25 % by weight, more preferably at most 20 % by weight.

In the case that the compound (A-1) and the compound (A-2) are used at the same time, the ratio of the compound (A-1) to the compound (A-2) is not particularly limited.

When the polymer used in the present invention is prepared, the whole monomer mixture may be at least one of the compound (A-1) and the compound (A-2). That is, the amount of at least one of the compound (A-1) and the compound (A-2) in the monomer mixture may be 100 % by weight. In the present invention, as far as the objects of the present invention are not hindered, the monomer mixture can contain a monomer (hereinafter referred to as "monomer (B)") having an unsaturated double bond, which can be copolymerized with at least one of the compound (A-1) and the compound (A-2).

The above monomer (B) can be suitably selected and used according to properties of the aimed ocular lens material, and the amount of the monomer (B) can be suitably adjusted so that the total amount of the monomer mixture reaches 100 % by weight. In consideration of the amount of at least one of the compound (A-1) and the compound (A-2), it is desired that the amount of the monomer (B) in the monomer mixture is at most 99.9 % by weight, preferably at most 99.5 % by weight, more preferably at most 99 % by weight. Also, it is desired that the amount of the monomer (B) in the monomer mixture is at least 70 % by weight, preferably at least 75 % by weight, more preferably at least 80 % by weight. For instance, in the case that a non-water-absorptive ocular lens material is desired, a hydrophobic monomer and a hydrophobic macromonomer may be mainly used as a monomer (B). In the case that a water-absorptive ocular lens material is desired, a hydrophilic monomer and a hydrophilic macromonomer may be mainly used as a monomer (B). In the case that an ocular lens material having high mechanical strength is desired, a reinforcing monomer and a reinforcing macromonomer may be mainly used as a monomer (B). In the case that an ocular lens material showing excellent water resistance and excellent solvent resistance is desired, a crosslinkable monomer for forming a crosslinked structure may be used as a monomer (B).

Concretely, for instance, in order to impart oxygen permeability to an ocular lens material and reinforce mechanical strength to the ocular lens material at the same time, as a monomer (B), there can be used a polysiloxane macromonomer such as a polysiloxane macromonomer in which a polymerizable group bonds to a siloxane main chain through one or two urethane bonds, a polysiloxane macromonomer in which a polymerizable group directly bonds to a siloxane main chain or a polysiloxane macromonomer in which a polymerizable group bonds to a siloxane main chain through an alkylene group.

Examples of the polysiloxane macromonomer are, for instance, a macromonomer represented by the formula (III):

$$A^1 - (U^2)_{m2} - S^3 - (T^4)_{m4} - (U^5)_{m5} - A^6 \qquad \text{(III)}$$

[wherein $A^1$ is a group represented by the formula:

$$Y^{11} - R^{12} -$$

(in which $Y^{11}$ is acryloyloxy group, methacryloyloxy group, vinyl group or allyl group, and $R^{12}$ is a linear or branched alkylene group having 1 to 6 carbon atoms);

$A^6$ is a group represented by the formula:

$$- R^{62} - Y^{61}$$

(in which $R^{62}$ is a linear or branched alkylene group having 1 to 6 carbon atoms and $Y^{61}$ is acryloyloxy group, methcryloyloxy group, vinyl group or allyl group);
$U^2$ is a group represented by the formula:

$$- X^{21} - E^{22} - X^{23} - R^{24} -$$

(in which $X^{21}$ is a covalent bond, oxygen atom or an alkylene glycol group having 1 to 6 carbon atoms, $E^{22}$ is - NHCO - group or a divalent group having - CONH - group and - NHCO - group in its both ends, derived from a diisocyanate selected from a saturated aliphatic diisocyanate, an alicyclic diisocyanate and an aromatic diisocyanate, $X^{23}$ is oxygen atom, an alkylene glycol group having 1 to 6 carbon atoms or a group represented by the formula:

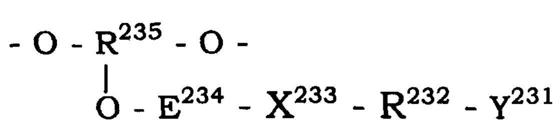

in which $R^{235}$ is a trivalent hydrocarbon group having 1 to 6 carbon atoms, $R^{232}$ is a linear or branched alkylene group having 1 to 6 carbon atoms, $E^{234}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $X^{233}$ is a covalent bond, oxygen atom or an alkylene glycol group having 1 to 6 carbon atoms, $Y^{231}$ is acryloyloxy group, methacryloyloxy group, vinyl group or allyl group (in the case that adjoining $E^{234}$ is - CONH - group, $X^{233}$ is a covalent bond; in the case that adjoining $E^{234}$ is a divalent group derived from diisocyanate, $X^{233}$ is oxygen atom or an alkylene glycol group having 1 to 6 carbon atoms; $E^{234}$ forms an urethane bond between adjoining oxygen atom and adjoining $X^{233}$), and $R^{24}$ is a linear or branched alkylene group having 1 to 6 carbon atoms (in the case that adjoining $E^{22}$ is - NHCO - group, $X^{21}$ is a covalent bond; in the case that adjoining $E^{22}$ is a divalent group derived from diisocyanate, $X^{21}$ is oxygen atom or an alkylene glycol group having 1 to 6 carbon atoms; $E^{22}$ forms an urethane bond between adjoining $X^{21}$ and adjoining $X^{23}$));

$U^5$ is a group represented by the formula:

$$- R^{54} - X^{53} - E^{52} - X^{51} -$$

(in which $R^{54}$ is a linear or branched alkylene group having 1 to 6 carbon atoms, $X^{53}$ is oxygen atom, an alkylene glycol group having 1 to 6 carbon atoms or a group represented by the formula:

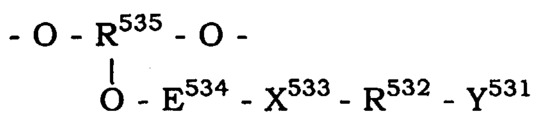

in which $R^{535}$ is a trivalent hydrocarbon group having 1 to 6 carbon atoms, $R^{532}$ is a linear or branched alkylene group having 1 to 6 carbon atoms, $E^{534}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $X^{533}$ is a covalent bond, oxygen atom or an alkylene glycol group having 1 to 6 carbon atoms, $Y^{531}$ is acryloyloxy group, methacryloyloxy group, vinyl group or allyl group (in the case that adjoining $E^{534}$ is - CONH - group, $X^{533}$ is a covalent bond; in the case that adjoining $E^{534}$ is a divalent group derived from diisocyanate, $X^{533}$ is oxygen atom or an alkylene glycol group having 1 to 6 carbon atoms; $E^{534}$ forms an urethane bond between adjoining oxygen atom and adjoining $X^{533}$), $E^{52}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, and $X^{51}$ is a covalent bond, oxygen atom or an alkylene glycol group having 1 to 6 carbon atoms (in the case that adjoining $E^{52}$ is - CONH - group, $X^{51}$ is a covalent bond; in the case that adjoining $E^{52}$ is a divalent group derived from diisocyanate, $X^{51}$ is oxygen atom or an alkylene glycol group having 1 to 6 carbon atoms; $E^{52}$ forms an urethane bond between adjoining $X^{51}$ and adjoining $X^{53}$));

$S^3$ is a group represented by the formula:

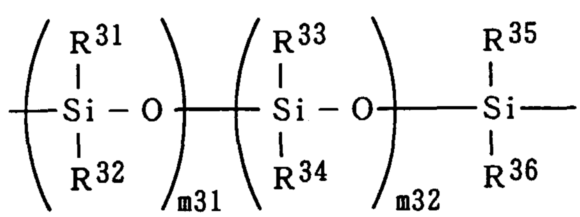

(in which each of $R^{31}$, $R^{32}$, $R^{33}$, $R^{35}$ and $R^{36}$ is independently a linear or branched alkyl group having 1 to 6 carbon atoms (in which at least one hydrogen atom may be substituted with fluorine atom) or phenyl group, $R^{34}$ is a linear or branched alkyl group having 1 to 6 carbon atoms (in which at least one hydrogen atom may be substituted with fluorine atom), phenyl group or a group represented by the formula:

$$|R^{346} - X^{345} - E^{344} - X^{343} - R^{342} - Y^{341}$$

in which each of $R^{346}$ and $R^{342}$ is independently a linear or branched alkylene group having 1 to 6 carbon atoms, $X^{345}$ and $X^{343}$ are covalent bonds, oxygen atoms or alkylene glycol groups having 1 to 6 carbon atoms, $E^{344}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $Y^{341}$ is acryloyloxy group, methacryloyloxy group, vinyl group or allyl group (in the case that adjoining $E^{344}$ is - CONH - group, $X^{345}$ and $X^{343}$ are covalent bonds; in the case that adjoining $E^{344}$ is a divalent group derived from diisocyanate, $X^{345}$ and $X^{343}$ are oxygen atoms or alkylene glycol groups having 1 to 6 carbon atoms; $E^{344}$ forms an urethane bond between adjoining $X^{345}$ and adjoining $X^{343}$) (there is no case that all $R^{31}$, $R^{32}$, $R^{33}$, $R^{34}$, $R^{35}$ and $R^{36}$ are linear or branched alkyl groups having 1 to 6 carbon atoms (in which at least one hydrogen atom may be substituted with fluorine atom) at the same time, or are phenyl groups at the same time), m31 is an integer of 1 to 100, m32 is 0 or an integer of 1 to (100 - m31), and m31 + m32 is an integer of 1 to 100);

$T^4$ is a group represented by the formula:

$$- U^{41} - S^{42} -$$

(in which $U^{41}$ is a group represented by the formula:

$$- R^{411} - X^{412} - E^{413} - X^{414} - R^{415} -$$

in which each of $R^{411}$ and $R^{415}$ is independently a linear or branched alkylene group having 1 to 6 carbon atoms, each of $X^{412}$ and $X^{414}$ is independently oxygen atom or an alkylene glycol group having 1 to 6 carbon atoms and $E^{413}$ is a divalent group having - CONH - group and - NHCO - group in its both ends, derived from a diisocyanate selected from a saturated aliphatic diisocyanate, an alicyclic diisocyanate and an aromatic diisocyanate ($E^{413}$ forms an urethane bond between adjoining $X^{412}$ and adjoining $X^{414}$), and $S^{42}$ is a group represented by the formula:

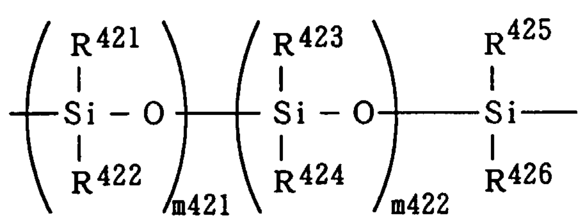

in which each of $R^{421}$, $R^{422}$, $R^{423}$, $R^{425}$ and $R^{426}$ is independently a linear or branched alkyl group having 1 to 6 carbon atoms (in which at least one hydrogen atom may be substituted with fluorine atom) or phenyl group, $R^{424}$ is a linear or branched alkyl group having 1 to 6 carbon atoms (in which at least one hydrogen atom may be substituted with fluorine atom), phenyl group or a group represented by the formula:

$$|R^{4246} - X^{4245} - E^{4244} - X^{4243} - R^{4242} - Y^{4241}$$

in which each of $R^{4246}$ and $R^{4242}$ is independently a linear or branched alkylene group having 1 to 6 carbon atoms, $X^{4245}$ and $X^{4243}$ are covalent bonds, oxygen atoms or alkylene glycol groups having 1 to 6 carbon atoms, $E^{4244}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $Y^{4241}$ is acryloyloxy group, methacryloyloxy group, vinyl group or allyl group (in the case that adjoining $E^{4244}$ is - CONH - group, $X^{4245}$ and $X^{4243}$ are covalent bonds; in the case that adjoining $E^{4244}$ is a divalent group derived from diisocyanate, $X^{4245}$ and $X^{4243}$ are oxygen atoms or alkylene glycol groups having 1 to 6 carbon atoms; $E^{4244}$

forms an urethane bond between adjoining $X^{4245}$ and adjoining $X^{4243}$) (there is no case that all $R^{421}$, $R^{422}$, $R^{423}$, $R^{424}$, $R^{425}$ and $R^{426}$ are linear or branched alkyl groups having 1 to 6 carbon atoms (in which at least one hydrogen atom may be substituted with fluorine atom) at the same time, or are phenyl groups at the same time), m421 is an integer of 1 to 100, m422 is 0 or an integer of 1 to (100 - m421), and m421 + m422 is an integer of 1 to 100, or a group represented by the formula:

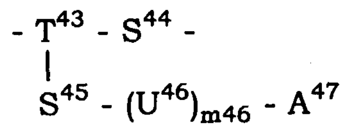

in which $T^{43}$ is a group represented by the formula:

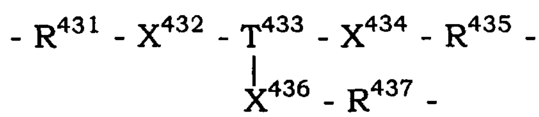

in which each of $R^{431}$, $R^{435}$ and $R^{437}$ is independently a linear or branched alkylene group having 1 to 6 carbon atoms, each of $X^{432}$, $X^{434}$ and $X^{436}$ is independently oxygen atom or an alkylene glycol group having 1 to 6 carbon atoms, and $T^{433}$ is a group represented by the formula:

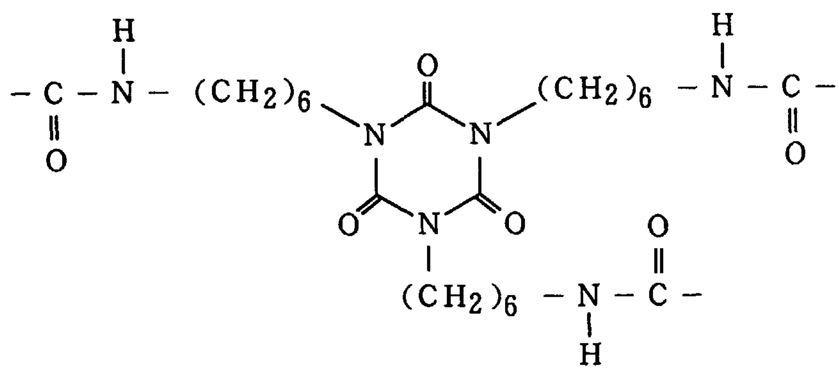

(an urethane bond is formed within adjoining $X^{423}$, $X^{434}$ and $X^{436}$), $S^{44}$ is a group represented by the formula:

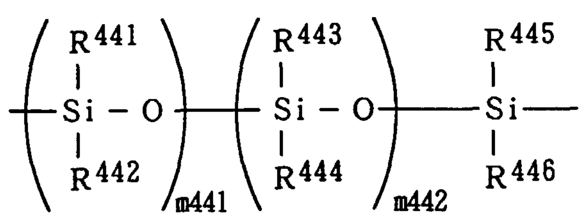

in which each of $R^{441}$, $R^{442}$, $R^{443}$, $R^{445}$ and $R^{446}$ is independently a linear or branched alkyl group having 1 to 6 carbon atoms (in which at least one hydrogen atom may be substituted with fluorine atom) or phenyl group, $R^{444}$ is a linear or branched alkyl group having 1 to 6 carbon atoms (in which at least one hydrogen atom may be substituted with fluorine atom), phenyl group or a group represented by the formula:

$$R^{4446} - X^{4445} - E^{4444} - X^{4443} - R^{4442} - Y^{4441}$$

in which each of $R^{4446}$ and $R^{4442}$ is independently a linear or branched alkylene group having 1 to 6 carbon atoms, $X^{4445}$ and $X^{4443}$ are covalent bonds, oxygen atoms or alkylene glycol groups having 1 to 6 carbon atoms, $E^{4444}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $Y^{4441}$ is acryloyloxy group, methacryloyloxy group, vinyl group or allyl group (in the case that adjoining $E^{4444}$ is - CONH - group, $X^{4445}$ and $X^{4443}$ are covalent bonds; in the case that adjoining $E^{4444}$ is a divalent group derived from diisocyanate, $X^{4445}$ and $X^{4443}$ are oxygen atoms or alkylene glycol groups having 1 to 6 carbon atoms; $E^{4444}$ forms an urethane bond between adjoining $X^{4445}$ and adjoining $X^{4443}$) (there is no case that all $R^{441}$, $R^{442}$, $R^{443}$, $R^{444}$, $R^{445}$ and $R^{446}$ are linear or branched alkyl groups having 1 to 6 carbon atoms (in which at least one hydrogen atom may be substituted with fluorine atom) at the same time, or are phenyl groups at the same time), m441 is an integer of 1 to 100, m442 is 0 or an integer of 1 to (100 - m441), and m441 + m442 is an integer of 1 to 100, $S^{45}$ is a group represented by the formula:

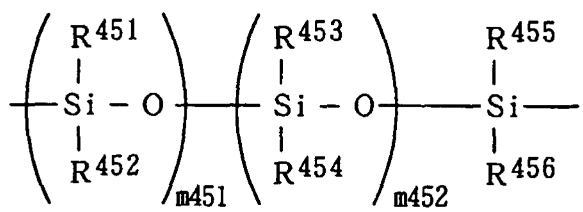

in which each of $R^{451}$, $R^{452}$, $R^{453}$, $R^{455}$ and $R^{456}$ is independently a linear or branched alkyl group having 1 to 6 carbon atoms (in which at least one hydrogen atom may be substituted with fluorine atom) or phenyl group, $R^{454}$ is a linear or branched alkyl group having 1 to 6 carbon atoms (in which at least one hydrogen atom may be substituted with fluorine atom), phenyl group or a group represented by the formula:

$$R^{4546} - X^{4545} - E^{4544} - X^{4543} - R^{4542} - Y^{4541}$$

in which each of $R^{4546}$ and $R^{4542}$ is independently a linear or branched alkylene group having 1 to 6 carbon atoms, $X^{4545}$ and $X^{4543}$ are covalent bonds, oxygen atoms or alkylene glycol groups having 1 to 6 carbon atoms, $E^{4544}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $Y^{4541}$ is acryloyloxy group, methacryloyloxy group, vinyl group or allyl group (in the case that adjoining $E^{4544}$ is - CONH - group, $X^{4545}$ and $X^{4543}$ are covalent bonds; in the case that adjoining $E^{4544}$ is a divalent group derived from diisocyanate, $X^{4545}$ and $X^{4543}$ are oxygen atoms or alkylene glycol groups having 1 to 6 carbon atoms; $E^{4544}$ forms an urethane bond between adjoining $X^{4545}$ and adjoining $X^{4543}$) (there is no case that all $R^{451}$, $R^{452}$, $R^{453}$, $R^{454}$, $R^{455}$ and $R^{456}$ are linear or branched alkyl groups having 1 to 6 carbon atoms (in which at least one hydrogen atom may be substituted with fluorine atom) at the same time, or are phenyl groups at the same time), m451 is an integer of 1 to 100, m452 is 0 or an integer of 1 to (100 - m451), and m451 + m452 is an integer of 1 to 100, $U^{46}$ is a group represented by the formula:

$$- R^{461} - X^{462} - E^{463} - X^{464} -$$

in which $R^{461}$ is a linear or branched alkylene group having 1 to 6 carbon atoms, $X^{462}$ is oxygen atom, an alkylene glycol group having 1 to 6 carbon atoms or a group represented by the formula:

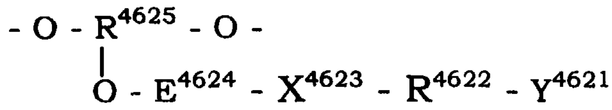

in which $R^{4625}$ is a trivalent hydrocarbon group having 1 to 6 carbon atoms, $R^{4622}$ is a linear or branched alkylene group having 1 to 6 carbon atoms, $E^{4624}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, $X^{4623}$ is a covalent bond, oxygen atom or an alkylene glycol group having 1 to 6 carbon atoms, $Y^{4621}$ is acryloyloxy group, methacryloyloxy group, vinyl group or allyl group (in the case that adjoining $E^{4624}$ is - CONH - group, $X^{4623}$ is a covalent bond; in the case that adjoining $E^{4624}$ is a divalent group derived from diisocyanate, $X^{4623}$ is oxygen atom or an alkylene glycol group having 1 to 6 carbon atoms; $E^{4624}$ forms an urethane bond between adjoining oxygen atom and adjoining $X^{4623}$), $E^{463}$ is - CONH - group or a divalent group having - CONH - group and - NHCO - group in its both ends, derived from a diisocyanate selected from a saturated aliphatic diisocyanate, an alicyclic diisocyanate and an aromatic diisocyanate, and $X^{464}$ is a covalent bond, oxygen atom or an alkylene glycol group having 1 to 6 carbon atoms (in the case that adjoining $E^{463}$ is - CONH - group, $X^{464}$ is a covalent bond; in the case that adjoining $E^{463}$ is a divalent group derived from diisocyanate, $X^{464}$ is oxygen atom or an alkylene glycol group having 1 to 6 carbon atoms; $E^{463}$ forms an urethane bond between adjoining $X^{462}$ and adjoining $X^{464}$), and $A^{47}$ is a group represented by the formula:

$$- R^{472} - Y^{471}$$

in which $R^{472}$ is a linear or branched alkylene group having 1 to 6 carbon atoms, $Y^{471}$ is acryloyloxy group, methacryloyloxy group, vinyl group or allyl group, and m46 is 0 or 1);
m2 is 0 or 1;
m4 is 0, 1, 2 or 3; and
m5 is 0 or 1 (in which m2, m5 and m46 are the same each other)], such as an urethane bond-containing polysiloxane macromonomer (hereinafter referred to as "macromonomer a") represented by the formula:

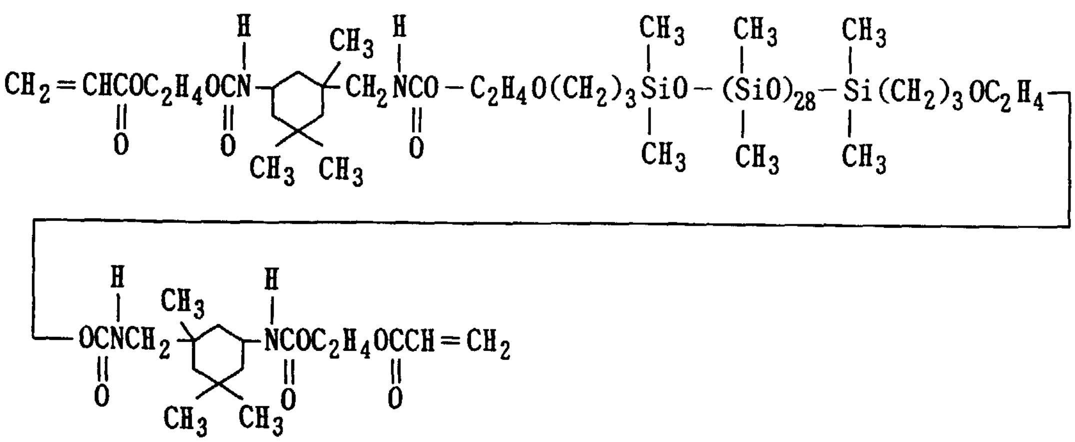

and the like.

The above polysiloxane macromonomers can be used alone or in admixture thereof. The amount of the polysiloxane macromonomer may be suitably adjusted according to properties of the aimed ocular lens material.

For instance, when it is desired that oxygen permeability of an ocular lens material is improved, a silicon - containing monomer such as a silicon - containing alkyl (meth)acrylate, a silicon - containing styrene derivative or an alkylvinylsilane can be used as the monomer (B).

Typical examples of the silicon-containing alkyl (meth)acrylate are, for instance, an organopolysiloxane-containing alkyl (meth)acrylate such as pentamethyldisiloxanylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)silylpropyl (meth)acrylate, tris[methylbis(trimethylsiloxy)siloxy]silylpropyl (meth)acrylate, methyl[bis(trimethylsiloxy)]silylpropylglyceryl (meth)acrylate, tris(trimethylsiloxy)silylpropylglyceryl (meth)acrylate, mono[methylbis(trimethylsiloxy)siloxy]bis(trimethylsiloxy)silylpropylglyceryl (meth)acrylate, trimethylsilylethyltetramethyldisiloxanylpropylglyceryl (meth)acrylate, trimethylsilylmethyl (meth)acrylate, trimethylsilylpropyl (meth)acrylate, trimethylsilylpropylglyceryl (meth)acrylate, pentamethyldisiloxanylpropylglyceryl (meth)acrylate methylbis(trimethylsiloxy)silylethyltetramethyldisiloxanylmethyl (meth)acrylate, tetramethyltriisopropylcyclotetrasiloxanylpropyl (meth)acrylate, tetramethyltriisopropylcyclotetrasiloxybis(trimethylsiloxy)silylpropyl (meth)acrylate or trimethylsiloxydimethylsilylpropyl (meth)acrylate; and the like.

Typical examples of the silicon-containing styrene derivative are, for instance, a silicon-containing styrene derivative represented by the formula (IV):

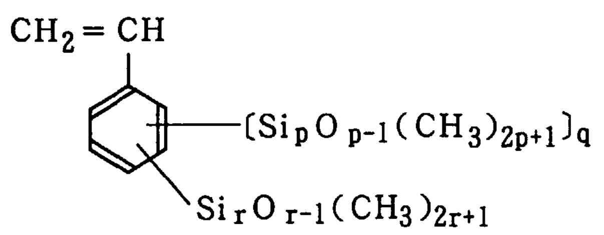

(IV)

wherein p is an integer of 1 to 15, q is 0 or 1 and r is an integer of 1 to 15, and the like. As to the silicon-containing styrene derivative represented by the formula (IV), when p or r in the formula (IV) is an integer of at least 16, there are tendencies that it is difficult to synthesize and purify the derivative and that hardness of an ocular lens material is lowered. When q in the formula (IV) is an integer of at least 2, there is a tendency that it is difficult to synthesize the derivative.

Typical examples of the silicon-containing styrene derivative represented by the formula (IV) are, for instance, tris(trimethylsiloxy)silylstyrene, bis(trimethylsiloxy)methylsilylstyrene, dimethylsilylstyrene, trimethylsilylstyrene, tris(trimethylsiloxy)siloxanyldimethylsilylstyrene, [bis(trimethylsiloxy)methylsiloxanyl]dimethylsilylstyrene, pentamethyldisiloxanylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris(pentamethyldisiloxy)silylstyrene, (tristrimethylsiloxy)siloxanylbis(trimethylsiloxy)silylstyrene, bis(heptamethyltrisiloxy)methylsilylstyrene, tris(methylbistrimethylsiloxysiloxy)silylstyrene, trimethylsiloxybis(tristrimethylsiloxysiloxy)silylstylene, heptakis(trimethylsiloxy)trisiloxanylstyrene, tris(tristrimethylsiloxysiloxy)silylstyrene, (tristrimethylsiloxyhexamethyl)tetrasiloxy(tristrimethylsiloxy)siloxytrimethylsiloxysilylstyrene, nonakis(trimethylsiloxy)tetrasiloxanylstyrene, bis(tridecamethylhexasiloxy)methylsilylstyrene, heptamethylcyclotetrasiloxanylstyrene, heptamethylcyclotetrasiloxybis(trimethylsiloxy)silylstyrene, tripropyltetramethylcyclotetrasiloxanylstyrene and the like.

Typical examples of the alkylvinylsilane are, for instance, trimethylvinylsilane and the like.

Among the above silicon-containing monomers, from the viewpoint that compatibility with the other monomers is excellent and oxygen permeability of an ocular lens material can be greatly improved, tris(trimethylsiloxy)silylpropyl (meth)acrylate and tris(trimethylsiloxy)silylstyrene are particularly preferable.

The above silicon-containing monomers can be used alone or in admixture thereof. The amount of the silicon-containing monomer may be suitably adjusted according to properties of the aimed ocular lens material.

When it is desired that hydrophilic property of an ocular lens material is improved and water-absorptive property is imparted to the ocular lens material, as the monomer (B), there can be used a hydrophilic monomer having hydroxy group, amido group, carboxyl group, amino group, glycol redidue, pyrrolidone skeleton and the like.

Typical examples of the hydrophilic monomer are, for instance, a hydroxyalkyl (meth)acrylate such as 2-hydroxyethyl (meth)acrylate, hydroxybutyl (meth)acrylate or hydroxypropyl (meth)acrylate; an (alkyl)aminoalkyl (meth)acrylate such as 2-dimethylaminoethyl (meth)acrylate or 2-butylaminoethyl (meth)acrylate; an alkyl(meth)acrylamide such as N,N-dimethyl(meth)acrylamide; a polyglycol mono(meth)acrylate such as propylene glycol mono(meth)acrylate; vinylpyrrolidone; (meth)acrylic acid; maleic anhydride; fumaric acid; a fumaric acid derivative; aminostyrene; hydroxystyrene; and the like.

Among the above hydrophilic monomers, from the viewpoint that compatibility with the other monomers is excellent and hydrophilic property of an ocular lens material can be greatly improved, vinylpyrrolidone, an alkyl(meth)acrylamide, (meth)acrylic acid and a hydroxyalkyl (meth)acrylate are particularly preferable.

The above hydrophilic monomers can be used alone or in admixture thereof. The amount of the hydrophilic monomer may be suitably adjusted according to properties of the aimed ocular lens material.

When it is desired that mechanical strength and durability (shape stability) of an ocular lens material are improved and water resistance and solvent resistance are imparted to the ocular lens material, as the monomer (B),

there can be preferably used a crosslinkable monomer which is a polyfunctional polymerizable compound having at least two copolymerizable unsaturated double bonds.

Typical examples of the crosslinkable monomer are, for instance, ethylene glycol di(meth)acrylate, diethylene glycol di(meth)acrylate, triethylene glycol di(meth)acrylate, propylene glycol di(meth)acrylate, dipropylene glycol di(meth)acrylate, allyl (meth)acrylate, vinyl (meth)acrylate, trimethylolpropane tri(meth)acrylate, methacryloyloxyethyl acrylate, divinylbenzene, diallyl phthalate, diallyl adipate, triallylisocyanurate, α-methylene-N-vinylpyrrolidone, 4-vinylbenzyl (meth)acrylate, 3-vinylbenzyl (meth)acrylate, 2,2-bis(p-(meth)acryloyloxyphenyl)hexafluoropropane, 2,2-bis(m-(meth)acryloyloxyphenyl)hexafluoropropane, 2,2-bis(o-(meth)acryloyloxyphenyl)hexafluoropropane, 2,2-bis(p-(meth)acryloyloxyphenyl)propane, 2,2-bis(m-(meth)acryloyloxyphenyl)propane, 2,2-bis(o-(meth)acryloyloxyphenyl)propane, 1,4-bis(2-(meth)acryloyloxyhexafluoroisopropyl)benzene, 1,3-bis(2-(meth)acryloyloxyhexafluoroisopropyl)benzene, 1,2-bis(2-(meth)acryloyloxyhexafluoroisopropyl)benzene, 1,4-bis(2-(meth)acryloyloxyisopropyl)benzene, 1,3-bis(2-(meth)acryloyloxyisopropyl)benzene, 1,2-bis(2-(meth)acryloyloxyisopropyl)benzene and the like.

Among the crosslinkable monomers, from the viewpoint that compatibility with the other monomers is excellent and mechanical strength and durability (shape stability) of an ocular lens material can be greatly improved, ethylene glycol di(meth)acrylate and 4-vinylbenzyl (meth)acrylate are particularly preferable.

The above crosslinkable monomers can be used alone or in admixture thereof. The amount of the crosslinkable monomer may be suitably adjusted according to properties of the aimed ocular lens material. In particular, in order to sufficiently improve durability (shape stability), it is desired that the amount of the crosslinkable monomer in the monomer mixture is at least 0.01 % by weight, preferably at least 0.5 % by weight. In order to remove a fear that an ocular lens material becomes brittle, it is desired that the amount of the crosslinkable monomer in the monomer mixture is at most 10 % by weight, preferably at most 7 % by weight.

When it is desired that deposit resistance of an ocular lens material is improved, as the monomer (B), there can be used a fluorine-containing monomer which is a polymerizable compound in which part of hydrogen atoms in hydrocarbon group are substituted with fluorine atoms.

Examples of the fluorine-containing monomer are, for instance, a monomer represented by the formula (V):

$$CH_2 = CR^7COOC_sH_{(2s-t-u+1)}F_t(OH)_u \qquad (V)$$

wherein $R^7$ is hydrogen atom or $CH_3$, s is an integer of 1 to 15, t is an integer of 1 to (2s+1) and u is 0,1 or 2; and the like.

Typical examples of the monomer represented by the formula (V) are, for instance, 2,2,2-trifluoroethyl (meth)acrylate, 2,2,3,3-tetrafluoropropyl (meth)acrylate, 2,2,3,3-tetrafluoro-t-pentyl (meth)acrylate, 2,2,3,4,4,4-hexafluorobutyl (meth)acrylate, 2,2,3,4,4,4-hexafluoro-t-hexyl (meth)acrylate, 2,3,4,5,5,5-hexafluoro-2,4-bis(trifluoromethyl)pentyl (meth)acrylate, 2,2,3,3,4,4-hexafluorobutyl (meth)acrylate, 2,2,2,2',2',2'-hexafluoroisopropyl (meth)acrylate, 2,2,3,3,4,4,4-heptafluorobutyl (meth)acrylate, 2,2,3,3,4,4,5,5-octafluoropentyl (meth)acrylate, 2,2,3,3,4,4,5,5,5-nonafluoropentyl (meth)acrylate, 2,2,3,3,4,4,5,5,6,6,7,7-dodecafluoroheptyl (meth)acrylate, 3,3,4,4,5,5,6,6,7,7,8,8-dodecafluorooctyl (meth)acrylate, 3,3,4,4,5,5,6,6,7,7,8,8,8-tridecafluorooctyl (meth)acrylate, 2,2,3,3,4,4,5,5,6,6,7,7,7-tridecafluoroheptyl (meth)acrylate, 3,3,4,4,5,5,6,6,7,7,8,8,9,9,10,10-ehxadecafluorodecyl (meth)acrylate, 3,3,4,4,5,5,6,6,7,7,8,8,9,9,10,10-heptadecafluorodecyl (meth)acrylate, 3,3,4,4,5,5,6,6,7,7,8,8,9,9,10,10,11,11-octadecafluoroundecyl (meth)acrylate, 3,3,4,4,5,5,6,6,7,7,8,8,9,9,10,10,11,11,11-nonadecafluoroundecyl (meth)acrylate, 3,3,4,4,5,5,6,6,7,7,8,8,9,9,10,10,11,11,12,12-eicosafluorododecyl (meth)acrylate, 2-hydroxy-4,4,5,5,6,6,7,7,7-octafluoro-6-trifluoromethylheptyl (meth)acrylate, 2-hydroxy-4,4,5,5,6,6,7,7,8,9,9,9-dodecafluoro-8-trifluoromethylnonyl (meth)acrylate, 2-hydroxy-4,4,5,5,6,6,7,7,8,8,9,9,10,11,11,11-hexadecafluoro-10-trifluoromethylundecyl (meth)acrylate and the like.

Among the above fluorine-containing monomers, from the viewpoint that deposit resistance of an ocular lens material can be greatly improved, 2,2,2-trifluoroethyl (meth)acrylate and 2,2,2,2',2',2'-hexafluoroisopropyl (meth)acrylate are particularly preferable.

The above fluorine-containing monomers can be used alone or in admixture thereof. The amount of the fluorine-containing monomer may be suitably adjusted according to properties of the aimed ocular lens material.

When it is desired that hardness of an ocular lens material is adjusted and the ocular lens material is made to be hard or soft, as the monomer (B), there can be used a monomer for adjusting hardness, which is a polymerizable compound having an alkyl group, such as an alkyl (meth)acrylate, an alkylstyrene or styrene.

Typical examples of the alkyl (meth)acrylate are, for instance, a linear, branched or cyclic alkyl (meth)acrylate such as methyl (meth)acrylate, ethyl (meth)acrylate, isopropyl (meth)acrylate, n-propyl (meth)acrylate, isobutyl (meth)acrylate, n-butyl (meth)acrylate, t-butyl (meth)acrylate, 2-ethylhexyl (meth)acrylate, n-octyl (meth)acrylate, n-decyl (meth)acrylate, n-dodecyl (meth)acrylate, n-pentyl (meth)acrylate, t-pentyl (meth)acrylate, hexyl (meth)acrylate, heptyl (meth)acrylate, nonyl (meth)acrylate, stearyl (meth)acrylate, cyclopentyl (meth)acrylate or cyclohexyl (meth)acrylate; an alkoxyalkyl (meth)acrylate such as 2-ethoxyethyl (meth)acrylate, 3-ethoxypropyl (meth)acrylate, 2-methoxyethyl (meth)acrylate or 3-methoxypropyl (meth)acrylate; an alkylthioalkyl (meth)acrylate such as ethylthioethyl

(meth)acrylate or methylthioethyl (meth)acrylate; and the like.

Typical examples of the alkylstyrene are, for instance, α-methylstyrene; an alkylstyrene such as methylstyrene, ethylstyrene, propylstyrene, n-butylstyrene, t-butylstyrene, isobutylstyrene or pentylstyrene; an alkyl-α-methylstyrene such as methyl-α-methylstyrene, ethyl-α-methylstyrene, propyl-α-methylstyrene, n-butyl-α-methylstyrene, t-butyl-α-methylstyrene, isobutyl-α-methylstyrene or pentyl-α-methylstyrene; and the like.

When it is desired that a soft ocular lens material such as a soft contact lens is produced, a monomer which constitutes a homopolymer having a glass transition temperature (hereinafter referred to as "Tg") of at most 40°C can be preferably used among the above monomers for adjusting hardness. When it is desired that a hard ocular lens material such as a hard contact lens is produced, a monomer which constitutes a homopolymer having Tg of more than 40°C can be preferably used among the above monomers for adjusting hardness. Also, from the viewpoint that compatibility and copolymerizable property with the other monomers are excellent, styrene, an alkyl (meth)acrylate and an alkylstyrene are particularly preferable.

The above monomers for adjusting hardness can be used alone or in admixture thereof. The amount of the monomer for adjusting hardness may be suitably adjusted according to properties of the aimed ocular lens material.

For instance, when it is desired that surface hydrophilic property and transparency of an ocular lens material are improved, as the monomer (B), there can be used a monomer represented by the formula (VI):

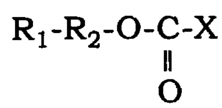

(VI)

wherein $R_1$ is a group represented by the formula:

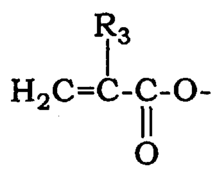

in which $R_3$ is hydrogen atom or methyl group, or a group represented by the formula:

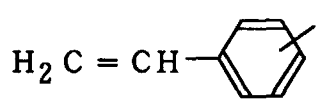

$R_2$ is an alkylene group having 1 to 5 carbon atoms, and X is

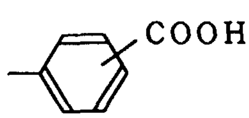

,

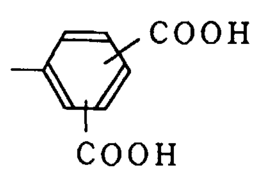

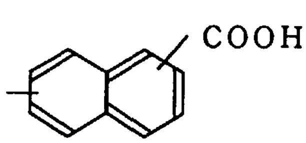

or

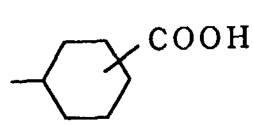

a monomer represented by the formula (VII):

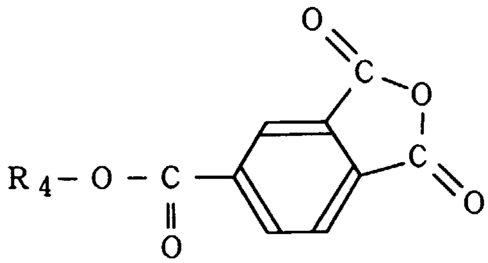

(VII)

wherein $R_4$ is a group represented by the formula:

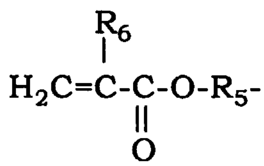

in which $R_5$ is an alkylene group having 1 to 5 carbon atoms and $R_6$ is hydrogen atom or methyl group, or a group represented by the formula:

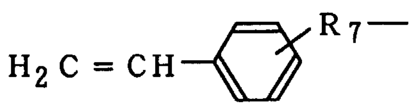

in which $R_7$ is direct bond or an alkylene group having 1 to 5 carbon atoms;
a monomer represented by the formula (VIII):

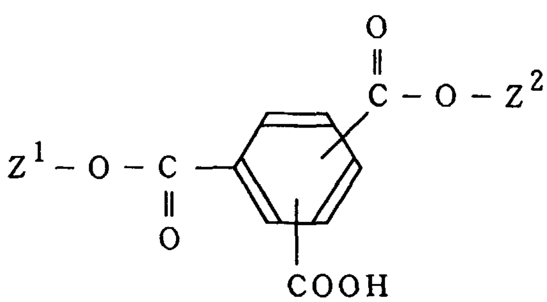

(VIII)

wherein each of $Z^1$ and $Z^2$ is independently a group represented by the formula:

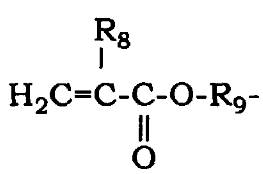

in which $R_8$ is hydrogen atom or methyl group and $R_9$ is an alkylene group having 1 to 10 carbon atoms, a group rep-

resented by the formula:

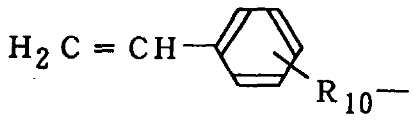

in which $R_{10}$ is an alkylene group having 1 to 10 carbon atoms, or a group represented by the formula:

$$H_2C=CH\text{-}O\text{-}R_{11}\text{-}$$

in which $R_{11}$ is an alkylene group having 1 to 10 carbon atoms; and the like.

Concrete examples of the monomer represented by the formula (VI) are, for instance, 2-phthaloyloxymethyl methacrylate, 2-phthaloyloxyethyl methacrylate, 2-phthaloyloxypropyl methacrylate, 3-phthaloyloxymethyl methacrylate, 3-phthaloyloxyethyl methacrylate, 3-phthaloyloxypropyl methacrylate, 4-phthaloyloxymethyl methacrylate, 4-phthaloyloxyethyl methacrylate, 4-phthaloyloxypropyl methacrylate, 2-hexahydrophthaloyloxymethyl methacrylate, 2-hexahydrophthaloyloxyethyl methacrylate, 2-hexahydrophthaloyloxypropyl methacrylate, 3-hexahydrophthaloyloxymethyl methacrylate, 3-hexahydrophthaloyloxyethyl methacrylate, 3-hexahydrophthaloyloxypropyl methacrylate, 4-hexahydrophthaloyloxymethyl methacrylate, 4-hexahydrophthaloyloxyethyl methacrylate, 4-hexahydrophthaloyloxypropyl methacrylate, 2-phthaloyloxymethyl acrylate, 2-phthaloyloxyethyl acrylate, 2-phthaloyloxypropyl acrylate, 3-phthaloyloxymethyl acrylate, 3-phthaloyloxyethyl acrylate, 3-phthaloyloxypropyl acrylate, 4-phthaloyloxymethyl acrylate, 4-phthaloyloxyethyl acrylate, 4-phthaloyloxypropyl acrylate, 2-hexahydrophthaloyloxymethyl acrylate, 2-hexahydrophthaloyloxyethyl acrylate, 2-hexahydrophthaloyloxypropyl acrylate, 3-hexahydrophthaloyloxymethyl acrylate, 3-hexahydrophthaloyloxyethyl acrylate, 3-hexahydrophthaloyloxypropyl acrylate, 4-hexahydrophthaloyloxymethyl acrylate, 4-hexahydorphthaloyloxyethyl acrylate, 4-hexahydrophthaloyloxypropyl acrylate, 4-methacryloyloxymethyl trimellitate, 4-methacryloyloxyethyl trimellitate, 4-methacryloyloxypropyl trimellitate, 4-acryloyloxymethyl trimellitate, 4-acryloyloxyethyl trimellitate, 4-acryloyloxypropyl trimellitate, 2-phthaloyloxymethylstyrene, 2-hexahydrophthaloyloxymethylstyrene, 7-methacryloyloxymethyl naphthoate, 7-methacryloyloxyethyl naphthoate, 7-methacryloyloxypropyl naphthoate and the like. These can be used alone or in admixture thereof. Among them, from the viewpoint that excellent transparency and excellent surface hydrophilic property can be effectively imparted to an ocular lens material, 2-phthaloyloxyethyl methacrylate represented by the formula:

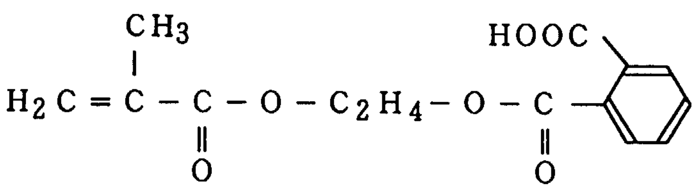

and 2-hexahydrophthaloyloxyehtyl methacrylate represented by the formula:

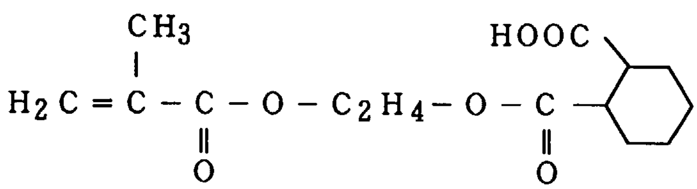

are particularly preferable.

Concrete examples of the monomer represented by the formula (VII) are, for instance, anhydride of (4-(meth)acryloyloxymethyl)trimellitate, anhydride of (4-(meth)acryloyloxyethyl) trimellitate, anhydride of (4-(meth)acryloyloxypropyl) trimellitate, anhydride of (4-vinylbenzyl) trimellitate and the like. These can be used alone or in admixture thereof. Among them, from the viewpoint that excellent transparency and excellent surface hydrophilic property can be

effectively imparted to an ocular lens material, anhydride of (4-methacryloyloxyethyl) trimellitate represented by the formula:

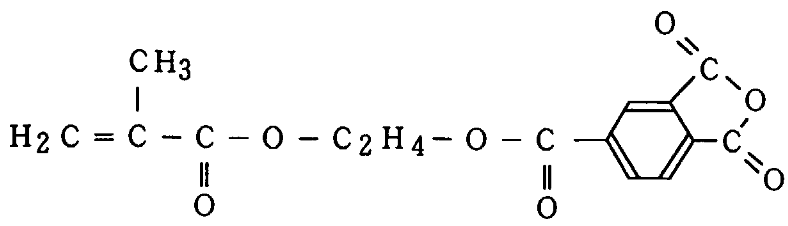

is particularly preferable.

Concrete examples of the monomer represented by the formula (VIII) are, for instance,

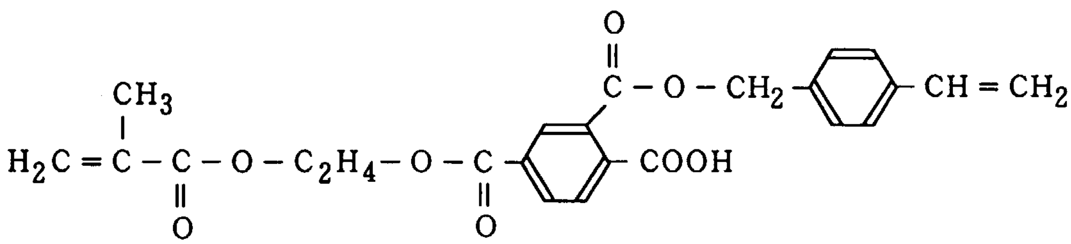

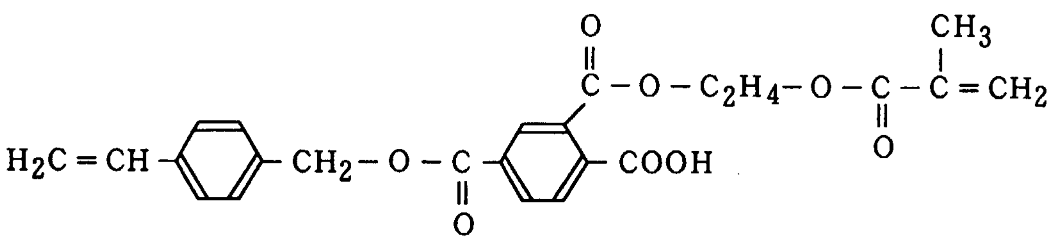

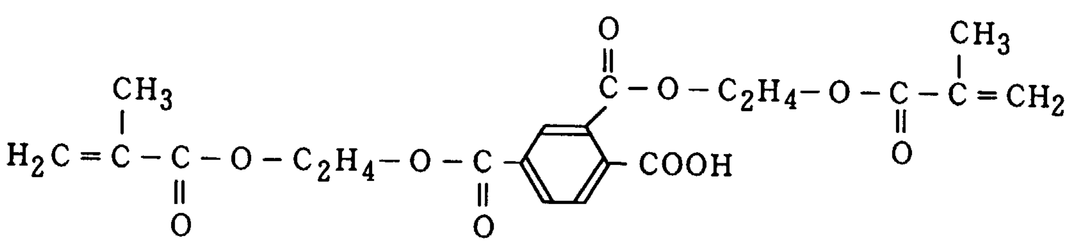

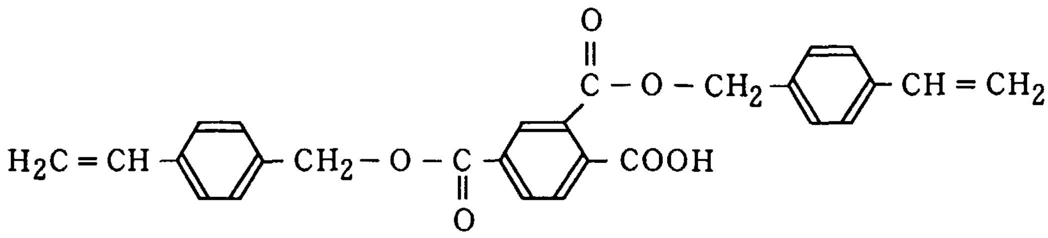

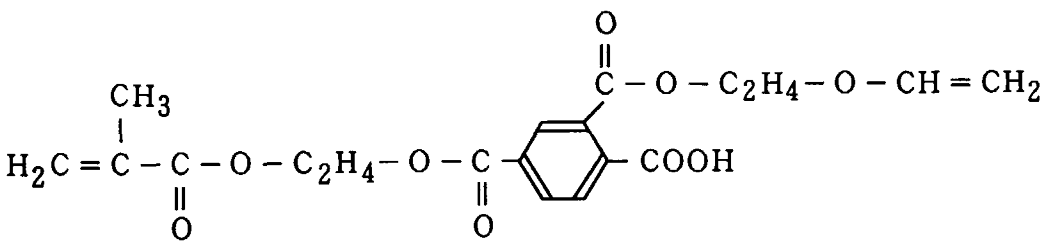

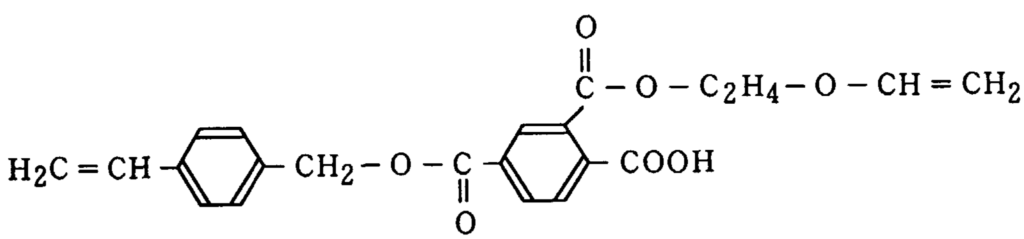

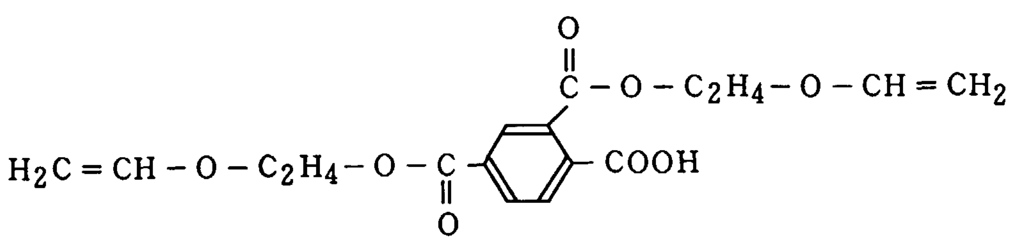

and the like. These can be used alone or in admixture thereof. Among them, from the viewpoint that excellent surface hydrophilic property and excellent transparency can be effectively imparted to an ocular lens material, compound represented by the formula:

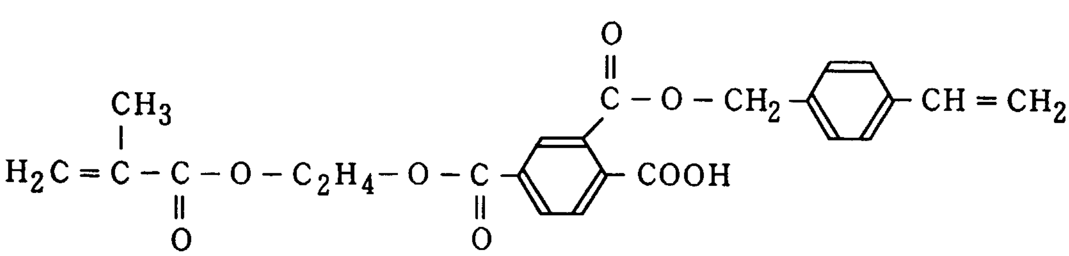

is particularly preferable.

When it is desired that ultraviolet-ray absorptive property is imparted to an ocular lens material and the ocular

lens material is colored, a polymerizable ultraviolet-ray absorbing agent, a polymerizable dyestuff and a polymerizable ultraviolet-ray absorbing dyestuff can be used as the monomer (B).

Concrete examples of the polymerizable ultraviolet-ray absorbing agent are, for instance, a polymerizable benzophenone ultraviolet-ray absorbing agent such as 2-hydroxy-4-(meth)acryloyloxybenzophenone, 2-hydroxy-4(meth)acryloyloxy-5-t-butylbenzophenone, 2-hydroxy-4-(meth)acryloyloxy-2',4'-dichlorobenzophenone or 2-hydroxy-4-(2'-hydroxy-3'-(meth)acryloyloxypropoxy)benzophenone; a polymerizable benzotriazole ultraviolet-ray absorbing agent such as 2-(2'-hydroxy-5'-(meth)acryloyloxyethylphenyl)-2H-benzotriazole, 2-(2'-hydroxy-5'-(meth)acryloyloxyethylphenyl)-5-chloro-2H-benzotriazole, 2-(2'-hydroxy-5'-(meth)acryloyloxypropylphenyl)-2H-benzotriazole or 2-(2'-hydroxy-5'-(meth)acryloyloxypropyl-3'-t-butylphenyl)-5-chloro-2H-benzotriazole; a polymerizable salicylic acid derivative ultraviolet-ray absorbing agent such as phenyl 2-hydroxy-4-methacryloyloxymethylbenzoate; methyl 2-cyano-3-phenyl-3-(3'-(meth)acryloyloxyphenyl)propenate; and the like. These can be used alone or in admixture thereof.

Concrete examples of the polymerizable dyestuff are, for instance, a polymerizable azo dyestuff such as 1-phenylazo-4-(meth)acryloyloxynaphthalene, 1-phenylazo-2-hydroxy-3-(meth)acryloyloxynaphthalene, 1-naphthylazo-2-hydroxy-3-(meth)acryloyloxynaphthalene, 1-(α-anthrylazo)-2-hydroxy-3-(meth)acryloyloxynaphthalene, 1-((4'-phenylazo)phenyl)azo)-2-hydroxy-3-(meth)acryloyloxynaphthalene, 1-(2',4'-xylylazo)-2-(meth)acryloyloxynaphthalene, 1-(o-tolylazo)-2-(meth)acryloyloxynaphthalene, 2-(m-(meth)acryloylamido-anilino)-4,6-bis(1'-(o-tolylazo)-2'-naphthylamino)-1,3,5-triazine, 2-(m-vinylanilino)-4-(4'-nitrophenylazo)-anilino)-6-chloro-1,3,5-triazine, 2-(1'-(o-tolylazo)-2'-naphthyloxy)-4-(m-vinylanilino)-6-chloro-1,3,5-triazine, 2-(p-vinylanilino)-4-(1'-(o-tolylazo)-2'-naphthylamino)-6-chloro-1,3,5-toriazine, N-(1'-(o-tolylazo)-2'-naphthyl)-3-vinylphthalic acid monoamide, N-(1'-(o-tolylazo)-2'-naphthyl)-6-vinylphthalic acid monoamide, 4'-(p-sulfophenylazo)-1'-naphthyl mono(3-vinylphthalate), 4'-(p-sulfophenylazo)-1'-naphthyl mono(6-vinylphthalate), 3-(meth)acryloylamido-4-phenylazophenol, 3-(meth)acryloylamido-4-(8'-hydroxy-3',6'-disulfo-1'-naphthylazo)phenol, 3-(meth)acryloylamido-4-(1'-phenylazo-2'-naphthylazo)phenol, 3-(meth)acryloylamido-4-(p-tolylazo)phenol, 2-amino-4-(m-(2'-hydroxy-1'-naphthylazo)anilino)-6-isopropenyl-1,3,5-triazine, 2-amino-4-(N-methyl-p-(2'-hydroxy-1'-naphthylazo)anilino)-6-isopropenyl-1,3,5-triazine, 2-amino-4-(m-(4'-hydroxy-1'-phenylazo)anilino)-6-isopropenyl-1,3,5-triazine, 2-amino-4-(N-methyl-p-(4'-hydroxyphenylazo)anilino)-6-isopropenyl-1,3,5-triazine, 2-amino-4-(m-(3'-methyl-1'-phenyl-5'-hydroxy-4'-pyrrazolylazo)anilino)-6-isopropenyl-1,3,5-triazine, 2-amino-4-(N-methyl-p-(3'-methyl-1'-phenyl-5'-hydroxy-4'-pyrrazolylazo)anilino)-6-isopropenyl-1,3,5-triazine, 2-amino-4-(p-phenylazoanilino)-6-isopropenyl-1,3,5-triazine or 4-phenylazo-7-(meth)acryloylamido-1-naphthol; a polymerizable anthraquinone dyestuff such as 1,5-bis((meth)acryloylamino)-9,10-anthraquinone, 1-(4'-vinylbenzoylamido)-9,10-anthraquinone, 4-amino-1-(4'-vinylbenzoylamido)-9,10-anthraquinone, 5-amino-1-(4'-vinylbenzoylamido)-9,10-anthraquinone, 8-amino-1-(4'-vinylbenzoylamido)-9,10-anthraquinone, 4-nitro-1-(4'-vinylbenzoylamido)-9,10-anthraquinone, 4-hydroxy-1-(4'-vinylbenzoylamido)-9,10-anthraquinone, 1-(3'-vinylbenzoylamido)-9,10-anthraquinone, 1-(4'-isopropenylbenzoylamido)-9,10-anthraquinone, 1-(3'-isopropenylbenzoylamido)-9,10-anthraquinone, 1-(2'-isopropenylbenzoylamido)-9,10-anthraquinone, 1,4-bis(4'-vinylbenzoylamido)-9,10-anthraquinone, 1,4-bis(4'-isopropenylbenzolyamido)-9,10-anthraquinone, 1,5'-bis(4'-vinylbenzoylamido)-9,10-anthraquinone, 1,5-bis(4'-isopropenylbenzoylamido)-9,10-anthraquinone, 1-methylamino-4-(3'-vinylbenzoylamido)-9,10-anthraquinone, 1-methylamino-4-(4'-vinylbenzoyloxyethylamino)-9,10-anthraquinone, 1-amino-4-(3'-vinylphenylamino)-9,10-anthraquinone-2-sulfonic acid, 1-amino-4-(4'-vinylphenylamino)-9,10-anthraquinone-2-sulfonic acid, 1-amino-4-(2'-vinylbenzylamino)-9,10-anthraquinone-2-sulfonic acid, 1-amino-4-(3'-(meth)acryloylaminophenylamino)-9,10-anthraquinone-2-sulfonic acid, 1-amino-4-(3'-(meth)acryloylaminobenzylamino)-9,10-anthraquinone-2-sulfonic acid, 1-(β-ethoxycarbonylallylamino)-9,10-anthraquinone, 1-(β-carboxyallylamino)-9,10-anthraquinone, 1,5-di-(β-carboxyallylamino)-9,10-anthraquinone, 1,5-di-(β-isopropoxycarbonylallylamino)-5-benzoylamido-9,10-anthraquinone, 2-(3'-(meth)acryloylamido-anilino)-4-(3'-(3"-sulfo-4"-aminoanthraquinone-1"-yl)-amino-anilino)-6-chloro-1,3,5-triazine, 2-(3'-(meth)acryloylamido-anilino)-4-(3'-(3"-sulfo-4"-aminoanthraquinone-1"-yl)-amino-anilino)-6-hydorazino-1,3,5-triazine, 2,4-bis-((4"-methoxyanthraquinone-1"-yl)-amino)-6-(3'-vinylanilino)-1,3,5-triazine or 2-(2'-vinylphenoxy)-4-(4'-(3"-sulfo-4"-aminoanthraquinone-1"-yl-amino)-anilino)-6-chloro-1,3,5-triazine; a polymerizable nitro dyestuff such as o-nitroanilinomethyl (meth)acrylate; a polymerizable phthalocyanine dyestuff such as (meth)acryloyl-modified tetraamino copper phthalocyanine or (meth)acryloyl-modified (dodecanoyl-modified tetraamino copper phthalocyanine); and the like. These can be used alone or in admixture thereof.

Concrete examples of the polymerizable ultraviolet-ray absorbing dyestuff are, for instance, a polymerizable benzophenone ultraviolet-ray absorbing dyestuff such as 2,4-dihydroxy-3-(p-styrenoazo)benzophenone, 2,4-dihydroxy-5-(p-styrenoazo)benzophenone, 2,4-dihydroxy-3-(p-(meth)acryloyloxymethylphenylazo)benzophenone, 2,4-dihydroxy-5-(p-(meth)acryloyloxymethylphenylazo)benzophenone, 2,4-dihydroxy-3-(p-(meth)acryloyloxyethylphenylazo)benzophenone, 2,4-dihydroxy-5-(p-(meth)acryloyloxyethylphenylazo)benzophenone, 2,4-dihydroxy-3-(p-(meth)acryloyloxypropylphenylazo)benzophenone, 2,4-dihydroxy-5-(p-(meth)acryloyloxypropylphenylazo)benzophenone, 2,4-dihydroxy-3-(o-(meth)acryloyloxymethylphenylazo)benzophenone, 2,4-dihydroxy-5-(o-(meth)acryloyloxymethylphenylazo)benzophenone, 2,4-dihydroxy-3-(o-(meth)acryloyloxyehtylphenylazo)benzophenone, 2,4-dihydroxy-5-(o-(meth)acryloyloxyethylphenylzao)benzophenone, 2,4-dihydroxy-3-(o-(meth)acryloyloxypropylphenylazo)benzophenone, 2,4-dihydroxy-5-(o-(meth)acryloyloxypropylphenylazo)benzophenone, 2,4-dihydroxy-3-(p-(N,N-di(meth)acryloyloxyethylamino)phenylazo)benzophenone, 2,4-dihydroxy-5-(p-(N,N-di(meth)acryloyloxyethylamino)phenylazo)benzophenone, 2,4-dihydroxy-3-(o-(N,N-di(meth)acryloyloxyethylamino)phenylazo)benzophenone, 2,4-dihydroxy-5-(o-(N,N-di(meth)acryloyloxyethylamino)phenylazo)benzophenone, 2,4-dihydroxy-3-(p-(N-ethyl-N-di(meth)acryloyloxyethylamino)phenylazo)benzophenone, 2,4-dihydroxy-5-(p-(N-ethyl-N-di(meth)acryloyloxyethylamino)phenylazo)benzophenone, 2,4-dihydroxy-3-(o-(N-ethyl-N-di(meth)acryloyloxyethylamino)phenylazo)benzophenone, 2,4-dihydroxy-5-(o-(N-ethyl-N-di(meth)acryloyloxyethylamino)phenylazo)benzophenone, 2,4-dihydroxy-3-(p-(N-ethyl-N-di(meth)acryloylamino)phenylazo)benzophenone, 2,4-dihydroxy-5-(p-(N-ethyl-N-di(meth)acryloylamino)phenylazo)benzophenone, 2,4-dihydroxy-3-(o-(N-ethyl-N-di(meth)acryloylamino)phenylazo)benzophenone or 2,4-dihydorxy-5-(o-N-ethyl-N-di(meth)acryloylamino)phenylazo)benzophenone; a polymerizable benzoic acid ultraviolet-ray absorbing dyestuff such as 2-hydroxy-4-(p-styrenoazo)phenyl benzoate; and the like. These can be used alone or in admixture thereof.

The amount of the above polymerizable ultraviolet-ray absorbing agent, the above polymerizable dyestuff and the above polymerizable ultraviolet-ray absorbing dyestuff may be suitably adjusted according to properties of the aimed ocular lens material. It is desired that the amount is adjusted in consideration of great influence with the thickness of a material. In order to remove fears that physical property such as mechanical strength of an ocular lens material is lowered and that the ocular lens material cannot be suitably used for ocular lenses such as a contact lens which directly contacts with organic tissues and an intraocular lens which is inserted within organism, in consideration of organic conformity of the polymerizable ultraviolet-ray absorbing agent, the polymerizable dyestuff and the polymerizable ultraviolet-ray absorbing dyestuff, it is desired that the amount is at most 3 % by weight of the monomer mixture, preferably 0.1 to 2 % by weight of the monomer mixture. In particular, when the amount of the dyestuff is too large, color of an ocular lens material becomes too deep and transparency of the material is lowered, so that it becomes difficult for the material to transmit visible-ray. Accordingly, the amount of the dyestuff may be suitably adjusted in consideration of the above fact.

In the present invention, at least one of the above various monomers other than the above polysiloxane macromonomer can constitute a macromonomer, and this macromonomer can be used as one member of the monomer (B).

The kinds and the amount of each component of the monomer mixture comprising at least one of the above compound (A-1) and the above compound (A-2) and, as occasion demands, the monomer (B) are suitably adjusted according to the use of the aimed ocular lens such as a contact lens or an intraocular lens, and the monomer mixture is subjected to the polymerization.

In the present invention, a polymer can be obtained by adjusting the amount of each component of the monomer mixture to the desired amount within the above range, respectively, adding, for instance, a thermal polymerization initiator to the monomer mixture, and polymerizing the monomer mixture according to a usual method.

The above usual method is, for instance, a method comprising adding the thermal polymerization initiator to the monomer mixture and carrying out the polymerization by gradually heating the monomer mixture within the range of the temperature of room temperature to about 130°C (thermal polymerization), or by irradiating electromagnetic wave such as microwave, ultraviolet-ray or radial rays (gamma rays) to the monomer mixture. When the thermal polymerization is carried out, the temperature of the monomer mixture may be increased stepwise. The polymerization may be carried out according to a bulk polymerization method, a solution polymerization method using a solvent, or the other methods.

Typical examples of the thermal polymerization initiator are, for instance, azobisisobutyronitrile, azobisdimethylvaleronitrile, benzoyl peroxide, t-butyl hydroperoxide, cumene hydroperoxide and the like. These can be used alone or in admixture thereof. When the polymerization is carried out utilizing electromagnetic wave, it is desired that a photo polymerization initiator and a sensitizer are added to the monomer mixture. It is desired that the total amount of the above polymerization initiator and the sinsitizer is 0.001 to 2 parts by weight (hereinafter referred to as "part(s)"), preferably 0.01 to 1 part based on 100 parts of the total amount of the monomer mixture.

In the present invention, as a method for forming the polymer into an ocular lens such as a contact lens, an intraocular lens or an artificial cornea, a forming method which has been usually employed by a person skilled in the art can be employed. Examples of the forming method are, for instance, a cutting process, a molding method and the like. The cutting process is a method comprising carrying out the polymerization in a suitable mold or a suitable container to give a material (polymer) having a shape such as bar, block or plate and subjecting the polymer to a mechanical process such as a cutting process or a polishing process to give a formed article having the desired shape. The molding method is a method comprising polymerizing the above monomer mixture in a mold having a shape corresponding to the desired shape of an ocular lens to give a molded product and, as occasion demands, subjecting the molded product to a mechanically finishing process to give a formed article.

When the ocular lens material of the present invention is produced as a soft material at the temperature near to room temperature, in general, it is desired that the molding method is employed as a method for forming the polymer into an ocular lens. Examples of the molding method are, for instance, a spin casting method, a static casting method

and the like.

In addition to the above methods, in the present invention, for instance, there can be suitably employed a method described in Japanese Unexamined Patent Publications No. 2780241/1987 and No. 11854/1989, which comprises impregnating a soft ocular lens material with a monomer which gives a hard polymer, after that polymerizing the monomer to more harden the lens material in whole, subjecting the lens material to a cutting process to give a formed product having the desired shape and removing the hard polymer from the formed product to give a formed article made of the soft material (ocular lens); and the like.

When an intraocular lens is produced, a lens and haptics may be separately produced, the haptics may be attached to the lens after production, and the lens and the haptics may be formed at the same time (on the whole).

The ocular lens material of the present invention is more specifically described and explained by mans of the following Examples. It is to be understood that the present invention is not limited to the Examples, and various changes and modifications may be made in the invention without departing from the spirit and scope thereof.

<u>EXAMPLES 1 to 3 and COMPARATIVE EXAMPLE 1</u>

A monomer mixture shown in Table 1 and as a polymerization initiator, 2,2'-azobis(2,4-dimethylvaleronitrile) in an amount of 0.02 part based on 100 parts of the total amount of the monomer mixture were uniformly mixed with each other to give a transparent solution. The solution was poured into a test tube made of glass, having an inside diameter of 15 mm, and a deoxidizer was added to the solution. The test tube was sealed up.

After the test tube was put into a thermostated circulating water bath and the polymerization was carried out at 35°C for 40 hours and at 50°C for 8 hours, the test tube was transferred from the thermostated circulating water bath to a circulating dry oven. The test tube was heated with gradually increasing the temperature of the solution in the test tube from 60° to 120°C for about 16 hours and the polymerization was completed to give a polymer having a diameter of about 15 mm and a shape like a bar.

The obtained polymer was cut into a piece having the desired thickness. A cutting and polishing process was conducted to the cut piece to give a test piece. As physical properties of the test piece, water content, transparency and antibacterial property were examined in accordance with the following methods. The results are shown in Table 1.

(1) Water content

The test piece having a thickness of 1.0 mm was immersed in physiological sodium chloride solution in a thermostated water bath at 35°C for at least 1 hour. Then, the test piece was completely swelled by boiling, and the weight of the swollen test piece ("W") was measured. The swollen test piece was dried in a dry oven at 110°C for 24 hours. The dried test piece was gradually cooled in a desiccator, and the weight of the dried and cooled test piece ("Wo") was measured. Using the values of W and Wo, water content was calculated in accordance with the following equation.

$$\text{Water content (\% by weight)} = \{(W(g)-Wo(g))\div W(g)\} \times 100$$

(2) Transparency

Using Shimazu automatic recording spectrophotometer made by SHIMAZU CORPORATION (UV-3100), visible-ray transmittance at a wavelength of 380 to 800 nm of the test piece having a thickness of 0.2 mm was measured.

(3) Antibacterial property

The test piece having an outside diameter of 14 mm and a thickness of 0.4 mm was immersed in a phosphoric acid buffer solution containing $1.1 \times 10^6$ Gram-positive bacteria (*Staphylococcus aureus*) in a flask, and the flask was shaken at 40°C for one day.

After the buffer solution was cultured at 37°C for one day in accordance with the agar plate dilution method, the number of the Gram-positive bacteria in the buffer solution was measured.

Each code in Table 1 shows the following compound.

MA-P: Tri-n-butyl(2-methacryloyloxyethyl)phosphonium chloride
ST-P: Tri-n-octyl(4-vinylbenzyl)phosphonium chloride
NVP: N-vinyl-2-pyrrolidone
HEMA: 2-Hydroxyethyl methacrylate
DMAA: N,N-Dimethylacrylamide
MMA: Methyl methacrylate

EDMA: Ethylene glycol dimethacrylate

TABLE 1

| Example No. | Monomer mixture (part(s)): Compound (A-1) | Compound (A-2) | Monomer (B) | | | | | Properties of test piece: Water content (% by weight) | Transparency (visible-ray transmittance (%)) | Antibacterial property (Number of Gram-positive bacteria) |
|---|---|---|---|---|---|---|---|---|---|---|
| | MA-P | ST-P | NVP | HEMA | DMAA | MMA | EDMA | | | |
| 1 | 2 | - | - | 98 | - | - | 0.2 | 35 | ≧98 | $4.9\times10^5$ |
| 2 | - | 10 | 70 | - | - | 20 | 0.5 | 60 | ≧98 | $4.6\times10^5$ |
| 3 | 8 | 7 | - | - | 70 | 15 | 0.5 | 72 | ≧98 | $4.0\times10^5$ |
| Com. Ex. 1 | - | - | 70 | - | 10 | 20 | 0.5 | 68 | ≧98 | $6.8\times10^6$ |

From the results shown in Table 1, it can be understood that all test pieces produced in Examples 1 to 3 have suitable water content, and show excellent transparency such a visible-ray transmittance of at least 98 %. Also, from the fact that Gram-positive bacteria not proliferate but decrease, it can be understood that all test pieces are excellent in antibacterial property.

In comparison with the above test pieces, from the fact that Gram-positive bacteria proliferate, it can be understood that the test piece produced in Comparative Example 1 is bad in antibacterial property because the test piece was produced without using the compound (A-1) and the compound (A-2).

In addition to the ingredients used in the Examples, other ingredients can be used in the Examples as set forth in the specification to obtain substantially the same results.

An ocular lens material comprising a polymer prepared by polymerizing a monomer mixture containing at least one of (A-1) a compound represented by the formula (I):

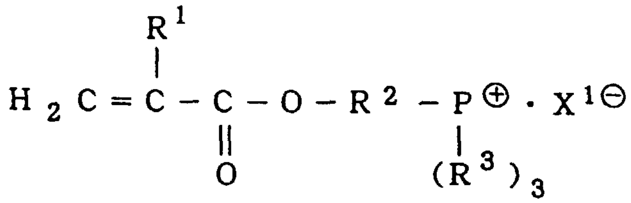

(I)

wherein $R^1$ is hydrogen atom or methyl group, $R^2$ is an alkylene group having 1 to 8 carbon atoms, $R^3$ is an alkyl group having 1 to 18 carbon atoms and $X^1$ is a halogen atom, and (A-2) a compound represented by the formula (II):

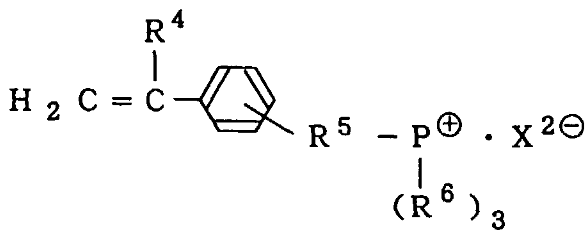

(II)

wherein $R^4$ is hydrogen atom or methyl group, $R^5$ is an alkylene group having 1 to 8 carbon atoms, $R^6$ is an alkyl group having 1 to 18 carbon atoms and $X^2$ is a halogen atom. The ocular lens material shows excellent antibacterial property.

## Claims

1. An ocular lens material comprising a polymer prepared by polymerizing a monomer mixture containing at least one of

(A-1) a compound represented by the formula (I):

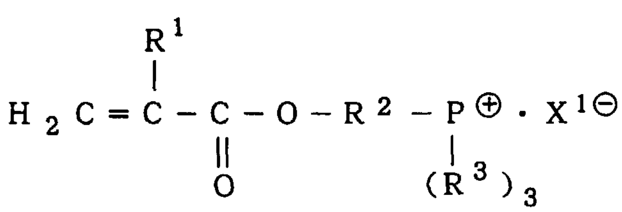

(I)

wherein $R^1$ is hydrogen atom or methyl group, $R^2$ is an alkylene group having 1 to 8 carbon atoms, $R^3$ is an alkyl group having 1 to 18 carbon atoms and $X^1$ is a halogen atom, and

(A-2) a compound represented by the formula (II):

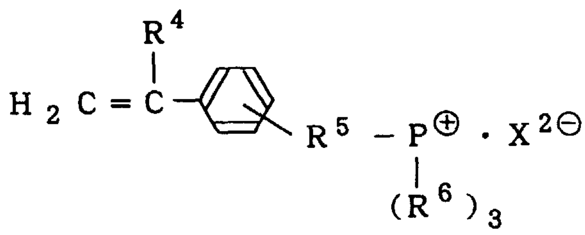

(II)

wherein $R^4$ is hydrogen atom or methyl group, $R^5$ is an alkylene group having 1 to 8 carbon atoms, $R^6$ is an alkyl group having 1 to 18 carbon atoms and $X^2$ is a halogen atom.

**2.** The ocular lens material of Claim 1, wherein the amount of at least one of the compound (A-1) and the compound (A-2) in the monomer mixture is 0.1 to 30 % by weight.

**3.** The ocular lens material of Claim 1, wherein the monomer mixture contains a monomer having an unsaturated double bond, which can be copolymerized with at least one of the compound (A-1) and the compound (A-2).